Europäisches Patentamt

European Patent Office

Office européen des brevets

(19)

(11) Numéro de publication : **0 507 694 A1**

## (12) DEMANDE DE BREVET EUROPEEN

(21) Numéro de dépôt : **92400935.0**

(22) Date de dépôt : **03.04.92**

(51) Int. Cl.$^5$ : **G06F 13/22**

(30) Priorité : **05.04.91 FR 9104192**

(43) Date de publication de la demande :
**07.10.92 Bulletin 92/41**

(84) Etats contractants désignés :
**AT BE CH DE DK ES FR GB GR IT LI LU NL PT SE**

(71) Demandeur : **Grasdepot, François**
**79 Rue de Gergovie**
**F-75014 Paris (FR)**

(72) Inventeur : **Chauvin, Edouard**
**3 Allee des Violettes**
**F-77310 Boissise le Roi (FR)**

(54) **Dispositif pour permettre la communication entre une unité centrale et plusieurs périphériques.**

(57)    L'invention est un dispositif pour permettre la communication sur ligne de type série entre plusieurs périphériques (11, 12, 13) et une unité centrale (1). L'invention utilise, sur l'unité centrale, deux lignes de communication (3,4), la deuxième (4) sert en propre à la communication série et la première (3) sert à transmettre l'adresse (5) d'un périphérique, choisi par l'unité centrale, à un multiplexeur (6). Le multiplexeur reconnaît l'adresse et sélectionne alors la voie (b) correspondant à cette adresse par l'établissement de la connexion entre son entrée (15), reliée à la deuxième ligne, et une de ses sorties (9) reliée au périphérique choisi (12).

   Le dispositif est applicable à la collecte d'information dans une chaîne de production ou un laboratoire.

FIGURE 1

EP 0 507 694 A1

La présente invention concerne le domaine de la transmission de données entre une unité centrale et plusieurs périphériques dans le cas où cette transmission utilise une ligne série.

Dans la communication sur ligne série, la transmission des données élémentaires s'effectue par envoi sur un même fil de séries de bits décalés dans le temps. Cette méthode permet de n'utiliser qu'un petit nombre de fils pour la transmission et s'est universellement répandue pour la liaison d'une unité centrale à un périphérique unique. Cette limitation étant inacceptable, le besoin d'un dispositif pour connecter plusieurs périphériques à une même unité centrale est très aigu et fait l'objet d'une demande importante des utilisateurs de cette liaison. Pourtant, cette demande n'est pas satisfaite par l'art antérieur en raison de nombreuses contraintes pesant sur un tel dispositif.

Tout d'abord, des normes très strictes définissent ces liaisons et apportent aux utilisateurs et aux fournisseurs d'appareils des avantages importants, la compatibilité d'un tel dispositif avec ces normes est donc obligatoire et ceci rend difficile la conception d'un tel dispositif.

En effet, les normes des liaisons série sont des normes matérielles qui définissent strictement ,au niveau matériel, les moyens de transmission de la ligne tout en restant muettes,sur le contenu de la transmission permise par la ligne. Cette façon de procéder énonce, en fait, deux interdictions, pour tout dispositif compatible avec ces normes: la première interdit de modifier physiquement la ligne série et la deuxième interdit de limiter les protocoles logiciels de transmission autorisés sur la ligne. L'utilisateur peut ainsi se connecter physiquement à des appareils d'origines diverses, conformes à la norme et les utiliser par logiciel selon tout protocole prévu par les constructeurs. Fort de cet avantage, la liaison série a connu un grand succès pour l'échange de données entre une unité centrale et un appareil. Par contre, elle n'est pas utilisée couramment pour la communication de plusieurs appareils avec une même unité centrale.

En effet, il est reconnu que, dans ce cas, ladite unité centrale doit être pourvue de moyens d'adressage, c'est à dire qu'elle doit pouvoir signifier aux appareils, celui avec lequel elle souhaite dialoguer. Seules deux techniques d'adressage sont répandues: l'utilisation ,sur la ligne de communication, de fils dédiés à la transmission des adresses et l'envoi sur les fils de transmission de données desdites adresses. Or, du fait de la définition même des normes des liaisons série ces deux méthodes se révèlent impraticables. En effet, il est interdit par la nonne de modifier physiquement la ligne pour ajouter aux liaisons série des fils de transmission dédiés aux adresses et il est aussi interdit par la norme de limiter l'usage de la ligne aux seuls protocoles qui transmettent des adresses.

Finalement, la liaison série ne peut étendre ses avantages à la communication d'une unité centrale avec un grand nombre de périphériques d'origines diverses et reste cantonnée à la liaison avec un seul périphérique.

Cependant, comme les unités centrales doivent , pour interagir avec le monde extérieur, échanger des données avec de nombreux périphériques, on a tenté de résoudre ce problème en munissant une unité centrale d'autant de lignes série que de périphériques. Malheureusement, les lignes de communication sont prévues ,en général , en petit nombre sur les unités centrales, en raison de problèmes d'encombrement et de consommation d'énergie Il n'est donc pas possible par cette solution de dépasser un petit nombre de périphériques.

Le problème technique rencontré est alors que le nombre de périphériques auxquels il est avantageux de pouvoir connecter l'unité centrale est très supérieur au nombre des lignes série disponibles.

Pour remédier à ce problème, une solution consiste à permettre à l'unité centrale de communiquer par une seule ligne avec plusieurs périphériques grâce à un système permettant d'aiguiller les données vers un périphérique choisi parmi plusieurs. Le système d'aiguillage peut être manuel, de type commutateur mécanique. Mais cette solution est lente et exige la présence d'un opérateur lors de la connexion de l'unité centrale au périphérique choisi, elle n'est pas adaptée à une automatisation.

Avantageusement, le système d'aiguillage est automatique et piloté par l'unité centrale. Les dispositifs de ce type ,dans l'art antérieur, utilisent pour réaliser un tel aiguillage automatique, une ligne série qui transporte des données et des adresses. Les adresses sont alors des données particulières utilisées par le système d'aiguillage pour orienter les données vers le périphérique choisi par l'unité centrale. Ceci est comme mentionné précédemment incompatible avec les normes des liaisons série car il interdit, à l'ensemble des périphériques, des protocoles logiciels qui seraient incompatibles avec celui du système d'aiguillage.

Finalement , l'art antérieur ne permet pas la communication entre une unité centrale et plusieurs périphériques sur ligne série en restant compatible avec les normes définissant la transmission sur une telle ligne.

Il est par ailleurs connu de l'homme de l'art , que les unités centrales possèdent , au minimum, deux lignes de communication aptes à la transmission de données: par exemple, une première pour la communication avec une imprimante et une deuxième de type ligne série ou ligne Modem.

Dans ce contexte, le but de la présente invention est de réaliser de façon simple une liaison sur ligne série entre une unité centrale et des périphériques , de manière automatique et sans modification de l'unité centrale ni des périphériques.

A cette fin, l'invention est un dispositif pour permettre la communication entre une unité centrale et plusieurs périphériques, comprenant une unité centrale munie d'au moins une première et une seconde lignes de communication aptes à transmettre des données sous forme de groupes de bits appelés caractères, ladite unité centrale pouvant communiquer avec au moins deux périphériques par la transmission sur ladite seconde ligne de groupes d'au moins un caractère appelés mots, l'unité centrale comportant un circuit d'adaptation d'entrée-sortie sur ladite seconde ligne et des moyens pour commander ce circuit d'adaptation et pour élaborer un mot d'adresse représentatif d'un des périphériques avec lequel une liaison est à établir, caractérisé en ce qu'il comprend des moyens de multiplexage comportant des première et seconde entrées reliées auxdites lignes de communication et des sorties reliées auxdits périphériques, en ce que les moyens d'élaboration de mots émettent ledit mot d'adresse sur ladite première ligne, en ce que les moyens de multiplexage comportent une pluralité de voies sélectivement adressables dont chacune relie ladite seconde entrée des moyens de multiplexage à l'un seulement desdits périphériques, en ce que les moyens de multiplexage comportent un décodeur de mot d'adresse propre à sélectionner la voie correspondant audit mot d'adresse et en ce que ladite seconde ligne de communication est de type série, c'est à dire utilisant un mode de liaison dans lequel les bits d'un groupe constituant un caractère sont transmis un par un.

Un mode particulier de réalisation de l'invention est le cas où le décodeur de mot d'adresse est conçu pour décoder des mots constitués d'au plus un caractère choisi parmi la liste de caractères que peut transmettre ladite première ligne de communication. Dans ce cas , le nombre maximum de périphériques avec lesquels l'unité centrale peut communiquer est égal au nombre de caractères distincts que peut transmettre ladite première ligne.

Un mode particulier de réalisation de l'invention est le cas où le décodeur de mot d'adresse est conçu pour décoder des mots constitués de plusieurs caractères choisis parmi la liste des caractères que peut transmettre ladite première ligne de communication. Dans ce cas le nombre maximum de périphériques avec lesquels l'unité centrale peut communiquer est égal au nombre de caractères dans un mot d'adresse multiplié par le nombre de caractères distincts que peut transmettre ladite première ligne.

Un mode particulier de réalisation de l'invention est le cas où ladite première ligne est de type parallèle , c'est à dire utilisant un mode de liaison dans lequel les bits d'un groupe constituant un caractère sont transmis simultanément.

Un mode particulier de réalisation de l'invention est le cas où ladite première ligne est une sortie vers une imprimante.

Un mode particulier de réalisation de l'invention est le cas où ladite première ligne est de type série.

Cette invention qui permet la communication d'une pluralité de périphériques avec une même unité centrale sur une ligne de type série, utilise à cette fin, deux lignes de communication , l'une pour transmettre des adresses , l'autre pour transmettre des données. Elle se distingue ,en cela, des solutions antérieures et n'en comporte pas les aspects contraignants. Tout d'abord, l'invention est totalement compatible avec toutes les normes des liaisons série car la ligne série ou deuxième ligne n'est pas modifiée physiquement et tout protocole logiciel y est autorisé. De plus, les lignes utilisées existent sur l'ensemble des unités centrales, l'invention est donc applicable à toutes les unités centrales. En particulier, elle est avantageusement applicable aux unités centrales sans possibilité d'extension ou qui ne possèdent , comme c'est le cas de nombreuses unités centrale portables, que deux lignes de communication : une première qui est une ligne imprimante et une deuxième qui est une ligne série. L'invention est aussi, parmi les dispositifs assurant une commutation de la ligne série, celui qui est le plus rapide pour la transmission des données sur cette ligne, ladite ligne ne véhiculant que des données.

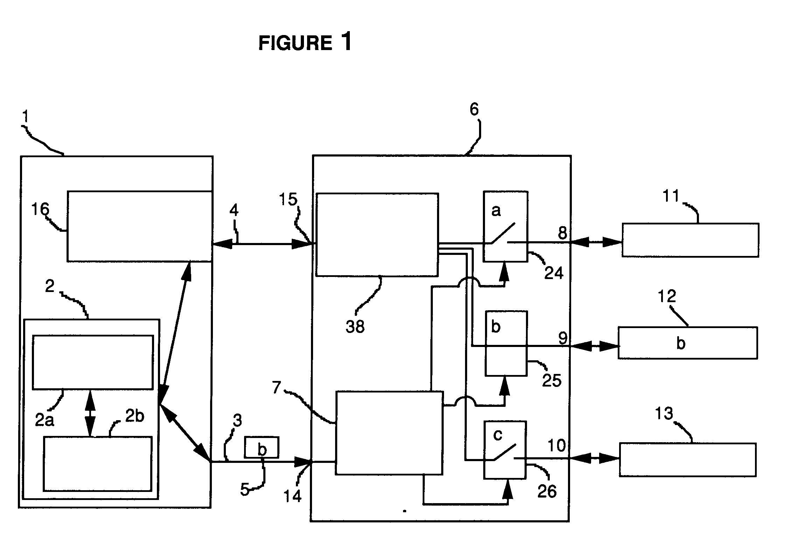

Pour mieux illustrer les avantages de l'invention, un mode particulier de sa réalisation est décrit ci-après, à titre indicatif et nullement limitatif, en référence aux figures 1 à 3.3, dans le cas d'une unité centrale munie d'une liaison série de type RS-232 et d'une liaison de type sortie parallèle, l'invention réalisant la communication de ladite unité centrale avec trois périphériques munis d'une ligne de communication RS-232.

La figure 1 représente un schéma par blocs du dispositif de l'invention;
La figure 2 représente un schéma par blocs des moyens de multiplexage de l'invention;
La figure 3.1 détaille le convertisseur de niveaux RS-232 à TTL apparaissant sur la figure 2;
La figure 3.2 détaille le décodage d'adresse apparaissant sur la figure 2;
La figure 3.3 détaille le convertisseur de niveaux TTL à RS-232 avec signal de validation apparaissant sur la figure 2.

Le dispositif particulier de l'invention décrit sur la figure 1 est destiné à permettre la communication entre une unité centrale et trois périphériques sur une liaison série RS-232. A titre d'exemple, la figure 1 illustre le cas où l'unité centrale établit la communication avec l'un quelconque des trois périphériques, comme décrit ci-après.

Ledit dispositif comprend une unité centrale , par exemple portable (1) , et possédant au moins deux lignes de communication: par exemple, une première ligne (3) de type sortie parallèle émettant des caractères de 2 bits et une deuxième ligne de type liaison série RS-232 (4). L'unité centrale comporte des moyens (2) , comprenant un microprocesseur (2a) et une mémoire associée (2b) , pour piloter un circuit d'adaptation d'entrée-sortie RS-232 (16) relié à la ligne RS-232 (4) et pour élaborer un mot d'adresse de 2 bits (5), valant b dans le cas de la figure 1, représentatif d'un des périphériques (11),(12),(13) avec lequel une liaison RS-232 est à établir. Conventionnellement, parmi les 4 caractères de 2 bits que peut transmettre ladite première ligne, trois de ces caractères sont associés aux lettres a,b et c sur la figure 1 et considérés comme adresses des périphériques. En l'occurrence, le périphérique (12) est choisi sur la figure 1. L'émission sur la première ligne (3) de l'adresse d'un des périphériques par les moyens d'élaboration de mots (2) signifie qu'à partir de cette émission, les mots de données transmis sur ladite deuxième ligne (4) concernent des échanges entre l'unité centrale et le périphérique dont l'adresse a été émise. Aux fins de réaliser ces échanges, ledit dispositif comprend aussi des moyens de multiplexage qui possèdent un première entrée parallèle ( 14) acceptant des données sur 2 bits , une deuxième entrée RS-232 (15) et des sorties (8)(9)(10) reliées auxdits périphériques et est caractérisé en ce que les moyens (2) d'élaboration de mots émettent une adresse sur 2 bits sur ladite première ligne, en ce que les moyens de multiplexage comportent trois voies (a)(b)(c) sélectivement adressables, reliant chacune la seconde entrée des moyens de multiplexage et l'un des périphériques et en ce que ces moyens de multiplexage comportent un décodeur d'adresses (7) propre à sélectionner la voie correspondant au mot d'adresse (5) émis.

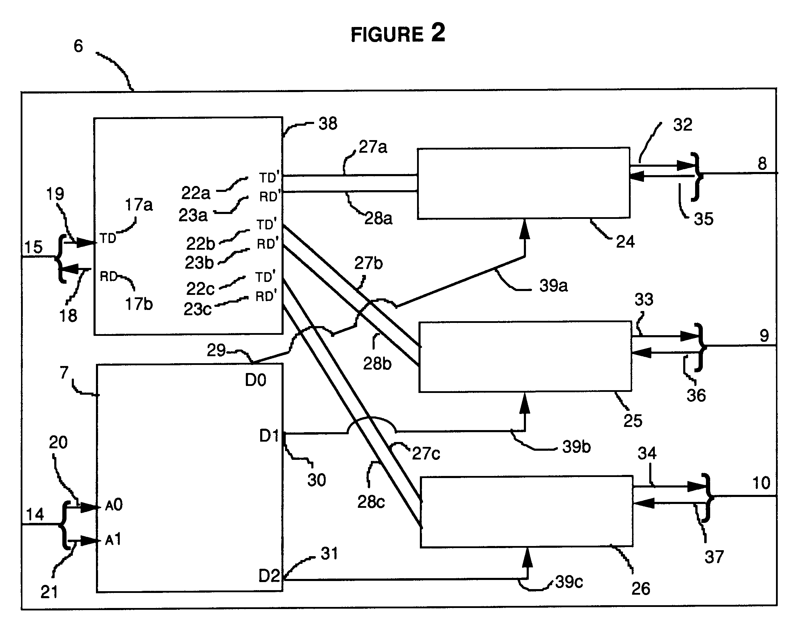

Lesdits moyens de multiplexage (6) sont décrits sur la figure 2. Sur cette figure, les moyens de multiplexage représentés, permettent de relier une unité centrale et trois périphériques. Ces moyens comprennent des première (14) et seconde (15) entrées et trois sorties (8)(9)(10). Lesdites seconde entrée (15) et sorties (8)(9)(10) sont des connecteurs à la norme RS-232 qui possèdent pour la transmission et la réception des données des lignes conventionnellement appelés fils TD (19,32,33,34) et RD (18,35,36,37) et nous considèrerons que l'établissement d'une liaison avec le périphérique (12) se ramène ici à établir une connexion physique entre les fils TD et RD de ladite seconde entrée (15) et ceux de la sortie (9) reliée audit périphérique (12). Ladite première entrée (14) est un connecteur de liaison parallèle qui possède deux lignes de données que nous appellerons fils A0 (20) et A1 (21).

Pour permettre l'établissement de la communication entre l'unité centrale et le périphérique dont l'adresse a été émise, les moyens de multiplexage (6) sont reliés à l'unité centrale (1) par une liaison de type sortie parallèle sur 2 bits (3) connectée sur leur première entrée (14) et une liaison RS-232 série (4) connectée sur leur seconde entrée (15). Ils sont aussi reliés aux périphériques (11),(12),(13) par des liaisons RS-232 connectées auxdites sorties (8),(9),(10). Ils sont constitués d'un décodeur d'adresses (7) relié à leur première entrée (14), d'un convertisseur RS-232 à TTL (38) , relié à leur deuxième entrée (15) et d'autant de convertisseurs (24) (25) (26), de type convertisseur TTL vers RS-232 avec fil de validation (39a,39b,39c), que de périphériques à connecter, lesdits convertisseurs étant reliés auxdites sorties (8)(9)(10).

Sur la figure 1, les lettres a,b,c sont respectivement indiquées dans les cadres représentant les convertisseurs correspondants (24) (25)(26); toutefois, par voie a,b ou c est entendue la voie complète connectant la seconde entrée (15) à une unité périphérique, respectivement (11),(12),(13); à un moment donné, une seule voie est active, sélectionnée par le décodeur d'adresse (7). Dans la présente description de l'invention, illustrée par la figure 1 (sélection et activation de la voie b), la lettre b est aussi mentionnée dans les cadres représentant l'adresse émise (5) et l'unité périphérique (12), de façon à montrer qu'à ce moment, la voie b est active.

Quand ledit décodeur d'adresse (7) reçoit de l'unité centrale (1) par ladite première ligne (3) deux bits d'adresse , sur les fils A0 (20) et A1 (21) , qui représentent conventionnellement le mot a,b (5) ou c, il met respectivement à l'état haut ses sorties D0, D1 ou D2.

Le convertisseur RS-232 à TTL (38) transforme les signaux RS-232 , compris entre +12Volts et -12Volts, de ses entrées TD (19) et RD (18), en signaux TTL, compris entre 0 et 5Volts, sur ses sorties TD'(22a) (22b) (22c) et RD'(23a) (23b) (23c). Il relie son entrée TD à toutes les sorties TD' et son entrée RD à toutes ses sorties RD'. Lesdites sorties TD' et RD' sont reliées par des lignes TTL (27a)(27b)(27c) (28a) (28b) (28c) à chacun des convertisseurs TTL à RS-232 (24) (25) (26).

Les convertisseurs TTL à RS-232 (24)(25)(26) sont reliés auxdites sorties D0,D1 ou D2 du décodage d'adresse (7) par des fils de validation (39a),(39b),(39c) , sont reliés par des lignes TTL précédemment mentionnées auxdites sorties TD'(22a) (22b) (22b) et RD' (23a) (23b) (23c) dudit convertisseur RS-232 vers TTL (38) et sont reliés par leurs sorties RS-232 TDt (32,33,34) et RD (35,36,37) auxdites sorties (8)(9)(10) des moyens de multiplexage (6). Chaque convertisseur TTL vers RS-232 interrompt la connexion entre le convertisseur RS-232 vers TTL et la sortie des moyens de multiplexage à laquelle il est relié, quand sa ligne de validation est à l'état bas. Quand sa ligne de validation est à l'état haut , chaque convertisseur établit la connexion entre ledit convertisseur RS-232 vers TTL et ladite sortie des moyens de multiplexage et convertit les niveaux TTL issus dudit convertisseur en niveaux RS-232 pour ladite sortie.

Quand les moyens de multiplexage recoivent sur leur première entrée (14), sur les fils A0 et AI (20),(21), des adresses qui sont des combinaisons de bits correspondant à un code de périphérique, le décodeur d'adresse met à un état haut une de ses sorties D0,D1 ou D2 conformément au code reçu et le convertisseur TTL vers RS-232 qui est relié à ladite sortie établit une connexion entre le convertisseur RS-232 vers TTL (38) et la ci-après nommée sortie active (9) des moyens de multiplexage (6) à laquelle ce convertisseur TTL vers RS-232 est relié. Une connexion série est alors établie entre ladite deuxième entrée (15) et la sortie active (9). L'unité centrale (1) , reliée à la deuxième entrée ( 15), et le périphérique (12) relié à cette sortie sont alors connectés entre eux par une liaison série RS-232.

Pour se connecter à un périphérique, l'unité centrale émet simplement sur ladite première ligne le code permettant la mise à un état haut de la ligne de validation du convertisseur RS-232 vers TTL qui est relié à la sortie des moyens de multiplexage connectée au périphérique choisi.

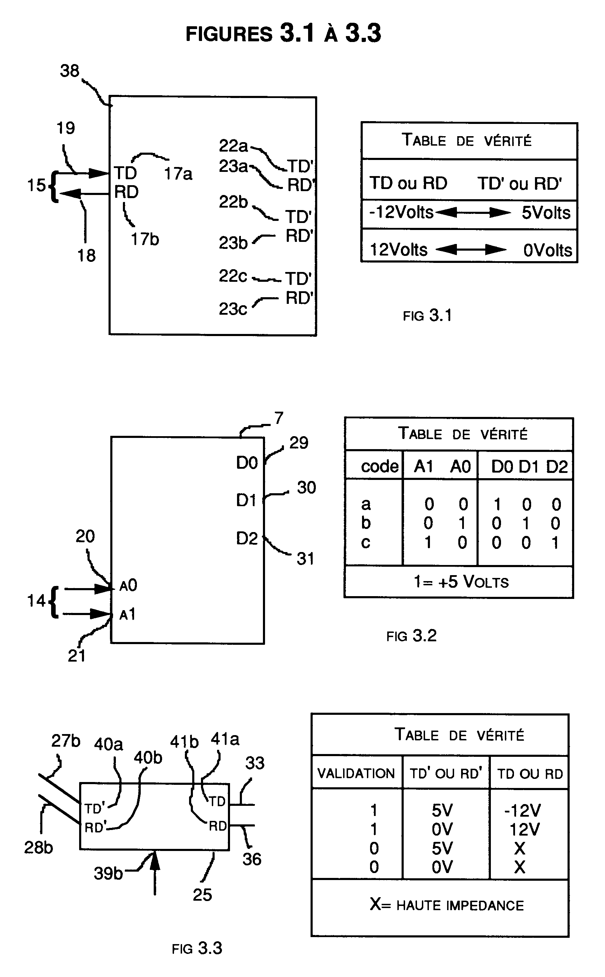

Les figures 3.1 à 3.3 détaillent les tables de vérité des composants apparaissant sur la figure 2.

La figure 3.1 détaille le fonctionnement du convertisseur de niveaux RS-232 vers TTL (38). Celui-ci convertit des niveaux RS-232 compris entre 12V et -12V, en niveaux TTL compris entre 0 et 5V, ladite conversion ayant lieu entre ses entrées RS-232 TD (17a) et RD (17b) et ses sorties TD'(22a) (22b) (22c) et RD' (23a) (23b) (23c) respectivement.

La figure 3.2 détaille le fonctionnement du décodeur d'adresse (7). Celui-ci répond en mettant à un état haut , une des sorties D0 (29), D1(30) ou D2 (31) dont le code est présenté en binaire sur les fils A0 (20) et A1 (21), ce qu'indique sa table de vérité. Les codes a,b et c sont conventionnellement associés aux valeurs de (A1,A0): (0,0) (0,1) (1,0) dans la logique du décodeur.

La figure 3.3 détaille le fonctionnement du convertisseur TTL vers RS-232 (25), assurant une conversion de niveaux TTL en niveaux RS-232 et possédant une ligne de validation (39b). Celui-ci transforme des signaux TTL, de valeurs entre 0V et +5V, en signaux RS-232, de valeurs entre -12V et +12V, entre ses entrées TD'(40a) et RD' (40b), reliées aux lignes TTL (27b)(28b) et ses sorties TD (41a) et RD) (41b) respectivement, reliées aux fils RS-232 TD (33) et RD (36), quand sa ligne de validation (39b) est à l'état haut. Quand ladite ligne de validation est à l'état bas, il coupe la liaison entre ses entrées et ses sorties, en prenant un état dit haute impédance. Les autres convertisseurs (24) et (26) sont de même type.

Sur l'exemple choisi, il est clair que , comme le format des adresses est de deux bits, sur les fils A0,A1 (20),(21), 4 périphériques peuvent donc être connectés au maximum sur l'unité centrale.

Cependant, si les mots d'adresse sont pris, par exemple, d'un format de 2 caractères de 8 bits, soit 16 bits, alors le nombre maximum de périphériques pouvant communiquer avec l'unité centrale, sur ligne série, passe à 65536. Le seul changement consiste à utiliser un décodeur d'adresse qui stocke deux caractères dans une mémoire et sélectionne un convertisseur TTL vers RS-232, seulement après réception de deux caractères.

C'est un avantage de l'invention de n'utiliser que des éléments existant sur l'unité centrale et de ne pas modifier les périphériques. L'application à des périphériques et unités centrales déjà en service avant l'invention est donc possible. Ceci préserve l'investissement matériel des utilisateurs de l'invention.

C'est un avantage de l'invention de n'utiliser aussi que des fonctions de communication déjà connues de l'unité centrale. Ceci permet la réutilisation de toutes les procédures de communication, assurant le fonctionnement des périphériques avec l'unité centrale, antérieurement à l'utilisation de l'invention. Ceci préserve l'investissement logiciel des utilisateurs de l'invention.

L'invention est applicable à la collecte d'information dans un laboratoire ou une usine automatisée.

**Revendications**

1. Dispositif pour permettre la communication entre une unité centrale et plusieurs périphériques, comprenant une unité centrale (1) munie d'au moins une première (3) et une seconde (4) lignes de communication aptes à transmettre des données sous forme de groupes de bits appelés caractères, ladite unité centrale pouvant communiquer avec au moins deux périphériques (11),(12),(13) par la transmission sur ladite seconde ligne de groupes d'au moins un caractère appelés mots, l'unité centrale comportant un circuit d'adaptation d'entrée-sortie (16) sur ladite seconde ligne (4) et des moyens (2) pour commander ce circuit d'adaptation et pour élaborer un mot d'adresse (5) représentatif d'un des périphériques avec lequel une liaison est à établir, caractérisé en ce qu'il comprend des moyens de multiplexage (6) comportant des première (14) et seconde (15) entrées reliées auxdites lignes de communication et des sorties (8),(9),(10) reliées auxdits périphériques, en ce que les moyens d'élaboration de mots (2) émettent ledit mot d'adresse sur ladite première ligne, en ce que les moyens de multiplexage comportent une pluralité de voies (a),(b),(c) sélectivement adressables dont chacune relie ladite seconde entrée (15) des moyens de multiplexage à l'un seulement desdits périphériques, en ce que les moyens de multiplexage comportent un décodeur de mot d'adresse (7) propre à sélectionner la voie correspondant audit mot d'adresse et en ce que ladite seconde ligne de communication (4) est de type série.

2. Dispositif suivant la revendication 1 , caractérisé en ce que le décodeur de mot d'adresse est conçu pour décoder des mots constitués d'au plus un caractère choisi parmi la liste de caractères que peut transmettre ladite première ligne de communication.

3. Dispositif suivant la revendication 1, caractérisé en ce que le décodeur de mot d'adresse est conçu pour décoder des mots constitués de plusieurs caractères choisis parmi la liste des caractères que peut transmettre ladite première ligne de communication.

4. Dispositif suivant la revendication 1 ou 2 ou 3,caractérisé en ce que ladite première ligne est de type parallèle.

5. Dispositif suivant la revendication 1 ou 2 ou 3 , caractérisé en ce que ladite première ligne est une sortie vers une imprimante.

6. Dispositif suivant la revendication 1 ou 2 ou 3, caractérisé en ce que ladite première ligne est de type série.

**FIGURE 1**

EP 0 507 694 A1

FIGURE 2

8

## FIGURES **3.1** À **3.3**

38

19

15 {
TD
RD

17a

17b

18

22a
23a — TD'
— RD'
22b — TD'
23b — RD'
22c — TD'
23c — RD'

| TABLE DE VÉRITÉ | |
|---|---|
| TD ou RD | TD' ou RD' |
| -12Volts ⟷ | 5Volts |
| 12Volts ⟷ | 0Volts |

FIG 3.1

7

20

14 {
A0
A1

21

D0 — 29
D1 — 30
D2 — 31

| TABLE DE VÉRITÉ | | | | | |
|---|---|---|---|---|---|
| code | A1 | A0 | D0 | D1 | D2 |
| a | 0 | 0 | 1 | 0 | 0 |
| b | 0 | 1 | 0 | 1 | 0 |
| c | 1 | 0 | 0 | 0 | 1 |
| 1= +5 VOLTS | | | | | |

FIG 3.2

27b  40a  41b  41a
40b  33

TD'       TD
RD'       RD

28b

39b       36

25

| TABLE DE VÉRITÉ | | |
|---|---|---|
| VALIDATION | TD' OU RD' | TD OU RD |
| 1 | 5V | -12V |
| 1 | 0V | 12V |
| 0 | 5V | X |
| 0 | 0V | X |
| X= HAUTE IMPEDANCE | | |

FIG 3.3

Office européen
des brevets

**RAPPORT DE RECHERCHE EUROPEENNE**

Numero de la demande

EP    92 40 0935

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 623 010 (K.E. BURKHALTER) | 1-3 | G06F13/22 |
| A | * colonne 1, ligne 11 - ligne 41 * | 4-6 | |
| | * colonne 1, ligne 72 - colonne 2, ligne 13 * | | |
| | * colonne 3, ligne 55 - colonne 4, ligne 30 * | | |
| | * figure 1 * | | |
| | --- | | |
| Y | US-A-3 512 133 (J.R. BENNETT ET AL.) | 1-3 | |
| A | * colonne 2, ligne 30 - ligne 52 * | 4-6 | |
| | * colonne 6, ligne 48 - colonne 7, ligne 6 * | | |
| | * figure 1 * | | |
| | --- | | |
| Y | US-A-3 573 740 (M.S. BERGER) | 1-3 | |
| | * colonne 1, ligne 8 - colonne 2, ligne 14 * | | |
| | * colonne 2, ligne 69 - colonne 3, ligne 32 * | | |
| | * figure 1 * | | |
| | --- | | |
| A | FR-A-2 183 314 (JEAN-MARIE GRAVIGNY) | 1-6 | |
| | * page 1, ligne 1 - ligne 6 * | | |
| | * page 1, ligne 26 - ligne 35 * | | |
| | * revendication 1 * | | |
| | * figure 1 * | | **DOMAINES TECHNIQUES RECHERCHES (Int. Cl.5)** |
| | ----- | | G06F |

Le présent rapport a été établi pour toutes les revendications

| Lieu de la recherche | Date d'achèvement de la recherche | Examinateur |
|---|---|---|
| LA HAYE | 21 JUILLET 1992 | NGUYEN Xuan Hiep C. |